(19) Europäisches Patentamt
European Patent Office
Office européen des brevets

(11) **EP 0 919 895 B1**

(12) **EUROPEAN PATENT SPECIFICATION**

(45) Date of publication and mention
of the grant of the patent:
**07.04.2004 Bulletin 2004/15**

(51) Int Cl.⁷: **G05B 19/40**

(21) Application number: **98309603.3**

(22) Date of filing: **24.11.1998**

(54) **System and method for controlling a step motor**

Vorrichtung und Verfahren zur Steuerung eines Schrittmotors

Dispositif et procédé de commande d'un moteur pas à pas

(84) Designated Contracting States:
**DE FR GB**

(30) Priority: **24.11.1997 KR 9762332**

(43) Date of publication of application:
**02.06.1999 Bulletin 1999/22**

(73) Proprietor: **SAMSUNG ELECTRONICS CO., LTD.**
**Suwon-City, Kyungki-do (KR)**

(72) Inventor: **Ha, Jong-Ho, 149-1605 Hwanggol**
**Paldal-gu, Suwon, Kyonggi-do (KR)**

(74) Representative:
**Tunstall, Christopher Stephen et al**
**Harrison Goddard Foote,**
**Fountain Precinct,**
**Leopold Street**
**Sheffield S1 2QD (GB)**

(56) References cited:
**EP-A- 0 267 527        EP-A- 0 320 163**
**US-A- 4 707 649**

**Description**

The present invention relates to a control system and method for a step motor and, more particularly, to a control system and method for a step motor capable of evenly maintaining a travelling distance in a moving section.

Conventionally, a step motor is used in printers for precise control of travelling distance when feeding paper to the printer, or moving a carriage equipped with a print head across the paper.

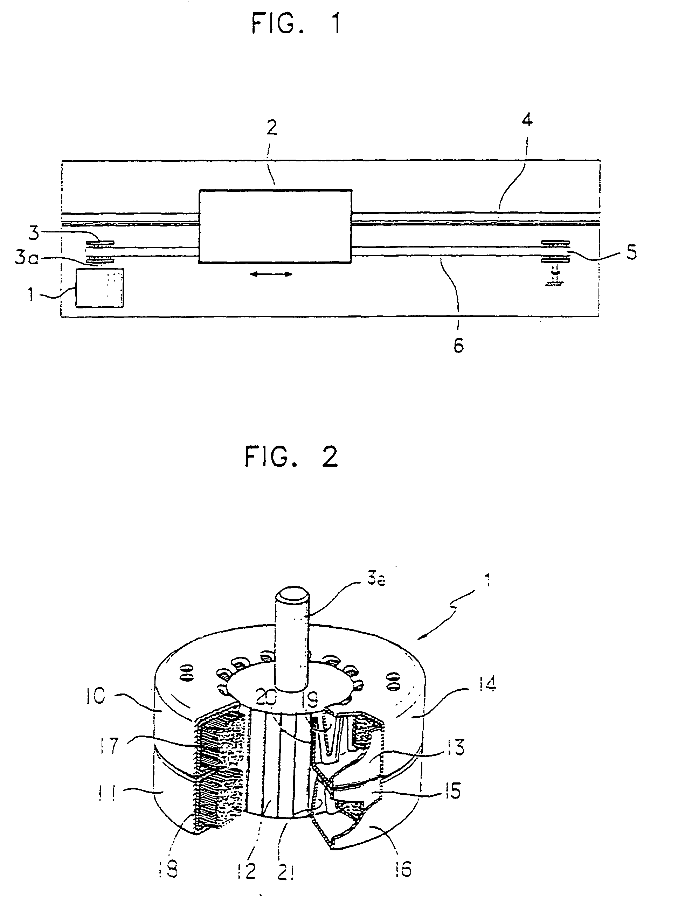

FIG. 1 is a schematic view of a driving unit of a conventional shuttle type printer.

As shown in the drawing, a driving pulley 3 is connected to a rotary shaft 3a of a step motor 1 which generates a torque. The rotating force of the driving pulley 3 is transmitted to a driving belt 6 and then to a driven pulley 5 by the driving belt 6. A printer unit 2 equipped with the print head is supported on a guide rail 4, and is attached to driving belt 6 so that it is transported along guide rail 4 as the driving belt 6 moves.

The printer unit is transported along guide rail 4 at least once to print each line. The travelling speed of the printer is defined by the step motor, and can be divided into: an acceleration period for arriving at a predetermined speed from start; a uniform speed period; and a deceleration period to stop at the end of a line. In order to obtain a required shape of a character, the printing operation should be performed while the printer is travelling in the uniform speed period.

The position for printing first characters on each line is related to the position of the printer unit when the acceleration period ends and the uniform speed period begins. For the position of the first character to be uniform in each line, the same torque and the same position of the printer unit is required in each line at the end of the acceleration period.

However, if an error in the step angles occurs in manufacturing or assembling the step motor, a speed difference in steps of the acceleration period is generated and an error occurs in the start printing position.

FIG. 2 is a cutaway perspective view illustrating the structure of a 2 phase step motor of a conventional permanent magnetic type.

In the outer peripheral surface of a cylindrical rotor 12, N and S poles are magnetised alternately along its circumference. The rotary shaft 3a is arranged along the central axis of the rotor 12, and each end of the rotary shaft 3a is fixed by a bearing.

A first stator 10 and a second stator 11 each has a cylindrical shape. The rotor 12 is inserted into the space inside the first stator and second stator. An air gap is left between the rotor 12 and stators 10 and 11.

The first stator 10 is comprised of a upper plate 14 and a lower plate 13 made of a material having high permeability. At the inner side of the upper plate 14, facing the permanent magnet of the rotor 12, hatched shaped inducers 19 are formed in the downward direction along the circumference. In addition, at the inner side of the lower plate 13, facing the permanent magnet of the rotor 12, hatched inducers 20 are formed in the upward direction located between the inducers 19 which are formed in the downward direction. Moreover, a first excitation coil 17 is wound within the internal space between upper plate 14 and lower plate 13.

The second stator 11 is similarly constructed. At the inner surfaces of an upper plate 15 and a lower plate 16, facing the rotor 12, hatched inducers 22 and 21 are formed, and they are interdigitated. In addition, a second excitation coil 18 is wound within the internal space between upper plate 15 and lower plate 16.

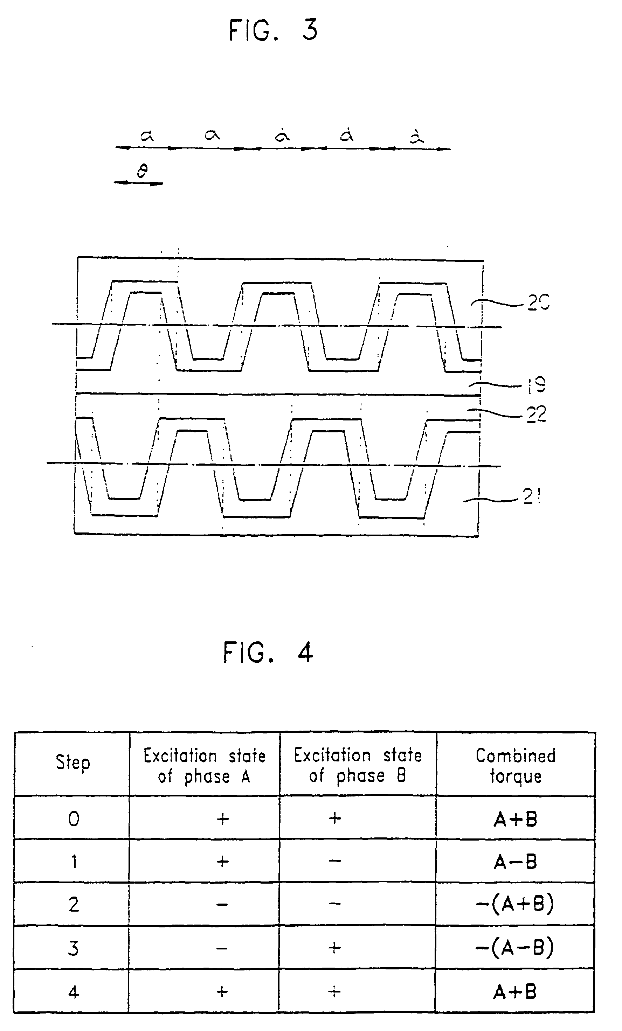

FIG. 3 is a development figure for illustrating the inducers formed at the first stator and the second stator.

As shown in the drawing, the inducer 19 formed at the upper plate 14 of the first stator 10 and the inducer 22 formed at the upper plate 15 of the second stator 11 are formed apart from each other by a mechanical angle θ. In relating the mechanical angle to an electrical angle, the two inducers 19 and 22 are formed to have a phase difference of 90°.

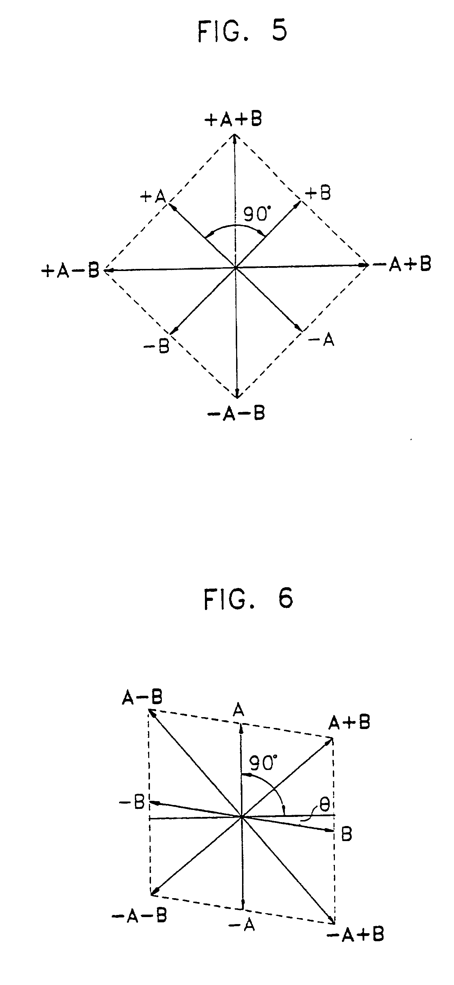

In the step motor having the above-identified structure, it is assumed that the phase of excitation state of the first coil 17 is A, and the phase of excitation state of the second coil 18 is B. Then, torques **A+B, A-B, -(A+B)** and **(A-B)** are generated, in order, by exciting each of the phases according to the sequence of steps indicated in FIG. 4. FIG. 5 shows a vector diagram of torque generated in each phase (step) of FIG. 4.

Referring to FIGs. 4 and 5, + (plus) and - (minus) signs indicate the rotating direction of the rotor 12. In other words, + indicates clockwise, and - indicates anticlockwise. Ideally, phases A and B are designed to have a phase difference of 90° and the resultant torques are as shown in FIG. 5.

However, due to the problems in assembling or manufacturing the step motor, the phase difference may not be 90°. The torques applied during each step are uneven and the distance travelled by the motor in each step, determined by each torque, becomes uneven. Especially, if problems are generated in the acceleration section, the positions where the printing operation begins become different in each line.

FIG. 6 is a vector diagram illustrating the torque generated in each step of FIG. 4, in the conventional step motor, when the phase difference is not exactly 90°.

When the phases A and B have a phase difference more than 90°, i.e., 90° + θ, the combined torque vectors **A+B, -A+B, -A+B** and **A-B** are not matched to each other. In the example of FIG 6, the amplitude of sum of vectors is as follows:

$$|A+B| \leq |A-B|$$

As shown in the above formula, when the signs of the two phase vectors are different, the sum of the vectors is greater than the sum of the vectors which have the same sign, for a phase difference of 90° + θ. The converse would be true for a phase difference of 90° - θ.

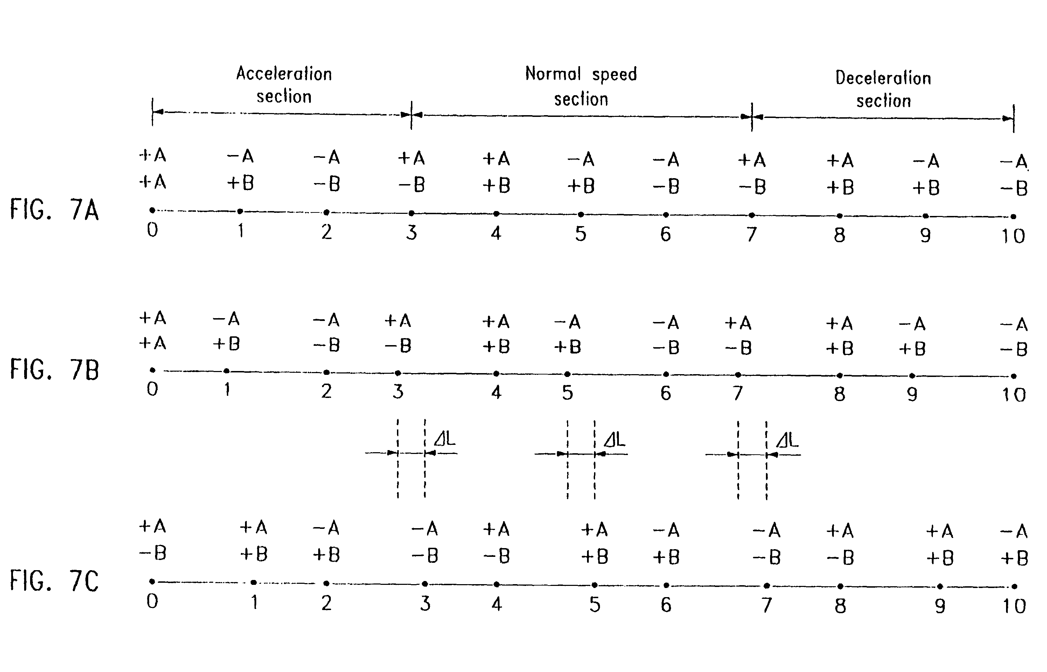

Assume that the printing operation in a first line starts with a step using an initial torque vector **A+B.** FIG. 7A shows an example of torque phases (steps) used by a step motor in displacing a printer unit across one line. First, the acceleration occurs during three steps (0, 1, 2). Then, the printing operation starts at the beginning of the uniform speed period and is performed during four steps (3, 4, 5, 6). Afterwards, deceleration is performed during three steps (7, 8, 9) and then the printing operation stops (step 10). As in FIG. 7A, if the phase difference is accurately 90° and the torques which are generated in each phase are the same, the travelling distances between each step are identical.

However, in the case that the phase difference is greater than 90°, the travelling distances for each step are as schematically indicated in FIG. 7B. When the excitation having the same sign is generated in the phases A and B, a small torque is generated (e.g. Step 0), and a small displacement results. On the contrary, when the excitation having different signs is generated (e.g. Step 1) in the phases A and B, a large torque is generated and a large displacement results.

FIGs. 7B and 7C show steps used by the step motor in moving print unit 2 through two consecutive print lines, in the case that each line is printed using 11 steps. The final phase vector used in the first line (FIG. 7B) is **-A-B,** so the first phase of the next line (FIG. 7C) becomes **+A-B.** Accordingly, the distance travelled in the acceleration section becomes different in the first and second lines. As a result, the start position (3) of the uniform (normal) speed period (where printing is started) in performing an unidirectional printing operation becomes different by ΔL. Similarly, when performing a bi-directional printing, the aforesaid difference can occur.

EP-A-0267527 and US-A-4707649 both disclose ways in which adjustment may be made to a stepping motors stopping position to try to achieve improved control.

The present invention aims to provide an apparatus and a method for accurately aligning print start positions of each line even though a step angle between phases A and B is not exactly 90° due to problems occurred in manufacturing and assembling the step motor.

According to a first aspect of the present invention there is provided a system for controlling a step motor which obtains a driving torque by exciting a plurality of coils into a predetermined sequence of respective states comprising:

a position detector for detecting the position of said step motor;

a phase detector for detecting the excitation state of the coils of said step motor;

a control unit for controlling start and stop operations of said step motor, so as to be performed in selected phases based on the position of said step motor detected by said position detector and the excitation state detected by said phase detector; and

a driving unit for driving said step motor according to a driving signal from said control unit; characterised in that said system further comprises a phase signal generator for exciting said coils into a next state out of sequence with said predetermined sequence.

The control unit preferably comprises: a memory for storing a control program, said selected excitation states and a target movement step number of said step motor; a central processing unit arranged to detect a stop position by comparing data from said position detector with the target movement step number stored in said memory; to then detect a phase of the stop position from said phase detector; and to then generate a control signal for controlling said target movement number of steps if the excitation state of the stop position and the selected phase of the stop position as stored in said memory do not correspond; and the phase signal generator generates a driving pulse to said driving unit in response to a control signal of said central processing unit.

The step motor is preferably a two phase step motor which is designed to have a phase difference of 90°, and has a large starting torque in a start time by setting selected excitation states of two phases to have a same sign in a stop time and to have different signs in the start time.

The control signal preferably causes said step motor to move step-by-step in the moving direction of said step motor.

Alternatively the control unit may comprise: a memory for storing a control program, said selected excitation states and a target movement number steps of said step motor; a central processing unit arranged to detect a stop position by comparing data of said position detector with the target movement number of steps stored in said memory; to then detect a phase of the stop position from said phase detector, and then to generate a control signal for driving said driving unit to have an excitation state after next in the sequence of respective states, by skipping over the next excitation state as a starting phase, if the excitation state of the stop position and the phase of the stop position stored in said memory do not match each other; and the phase signal generator generates a driving pulse to said step motor driving unit according to a control signal of said central processing unit.

According to a second aspect of the present invention there is provided a method for controlling a step motor containing a plurality of coils which are excited into a predetermined sequence of states, each comprising a plurality of phases, the method comprising the steps of:

storing a target movement step number of said step motor and preferred excitation states of each phase in start and stop times;
detecting the stop time of said step motor and comparing the excitation state at the stop time with the stored excitation states of each phase of the stop time; and
controlling said target movement number of the step in the case that said excitation states do not match each other; characterised by selecting a next state into which said coils are excited, said next state being out of sequence with said predetermined sequence.

The step motor is preferably a two phase step motor which is designed to have a phase difference of 90°, and has a large starting torque in a start time by setting the preferred excitation states of two phases to have a same sign in a stop time and to have different signs in the start time.

Preferably, at said step of controlling the target movement, the controlling operation is performed step-by-step in the moving direction of said step motor.

The present invention will now be described by way of example with reference to the accompanying drawings in which:

FIG. 1 is a schematic view illustrating a driving unit of a conventional shuttle type printer;
FIG. 2 is a cutaway perspective view for illustrating the structure of a 2 phase step motor of a conventional permanent magnet type;
FIG. 3 is a development figure for illustrating inducers formed at a first stator and a second stator;
FIG. 4 is a table illustrating excitation states of each phase (step);
FIG. 5 is a vector diagram illustrating the excitation states of each phase (step) in the conventional motor;
FIG. 6 is a vector view illustrating the excitation states of each phase (step) when the phase difference of each phase is not 90° in the conventional step motor;
FIGS. 7A - 7C illustrate the phase (step) sequence, and displacement, for a printer unit driven by a step motor under various conditions;
FIG. 8 is a block diagram illustrating one embodiment of the present invention; and
FIG. 9 is a flowchart illustrating a process of the present invention.

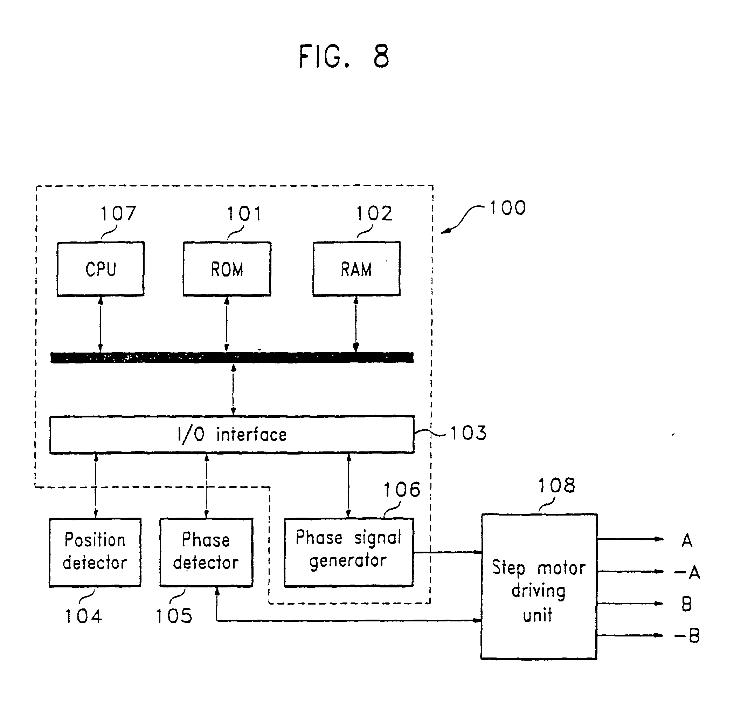

In FIG. 8, a step motor control unit 100 includes a central processing unit 107; a ROM 101 for storing data and control program for controlling the central processing unit 107, and storing a target movement of a step of the step motor; a RAM 102 for temporarily storing data for inputting/outputting to/from the central processing unit 107; an input/output interface 103 for exchanging data between the central processing unit 107 and its peripheral devices; and a phase signal generator 106 for generating a specific pulse inputted by the input/output interface 103 and a stepping pulse for determining the rotating direction of the motor. Thus, the signal generator 106 generates signals for driving the step motor.

A position detector 104 detects the present position of the step motor which is driven or stopped, by calculating the position from the number of steps applied to the motor, and transmits data to the central processing unit 107 through the input/output interface 103. The central processing unit 107 judges whether the step motor arrives at the target movement amount by continuously comparing the detected position data with the target movement amount stored in the ROM 101.

A step motor driving unit 108 allows phases A and B to be excited in the order of **A+B, -A+B, -A-B** and **A-B,** according to the pulse signal of the phase signal generator 106 generated according to a pulse command signal which is inputted from the central processing unit 107 through the input/output interface 103.

In addition, a phase detector 105 detects the phase which is presently excited, from the excitation phase of the step motor driving unit 108, and transmits data of the presently excited phase to the central processing unit 107 through the input/output interface 103.

When it is detected that the step motor arrives at the target movement amount (by comparing the present position transmitted from the position detector 104 with the target movement amount), the central processing unit 107 detects the present excitation state transmitted from the phase detector 105. The CPU 107 detects whether the present excitation state is the same as a specific phase previously stored in the ROM 101 and intended to correspond to the target movement amount.

If the excitation state is in the specific phase, a stop command signal is transmitted to the phase signal generator 106 so that the step motor driving unit 108 no longer excites each phase.

If the excitation state is not the specific phase, a control command for stopping the step motor is transmitted. The step motor is thereby controlled such that, in the case that the step motor rotates clockwise, it stops after moving by one step in the forward direction. In the case that the step motor rotates anti-clockwise, it stops after moving by one step in the backward direction. Thus, the step is always taken in the clockwise sense. The forward direction is one in which the printer unit moves to the right and the motor is rotating clockwise, and the backward direction is one in which the printer unit moves to the left and the motor is rotating anti-clockwise.

In the case that the excitation states are unevenly distributed, (e.g. FIG.6) the torque generated from the excited coils is greater when the signs of two phases are different than when they are the same, as shown in the aforesaid formula: $|\mathbf{A+B}| \leq |\mathbf{A-B}|$. Accordingly, in order to increase the starting torque, the starting phases (0) of each line are set to have the phases of **'A-B'** or **'-A+B'** which have different signs and larger torque. On the contrary, in the case of deceleration, the final stop phase (10) is set to have phases **'A+B'** or **'-A-B'** which have smaller torque.

The position detector 104 calculates the position of the step motor 108 after the starting position is fixed to zero and the present position is processed by a software such as a program for adding the number of pulses applied to the step motor. Similarly, the phase detector 105 fixes the signals with initial phases of each line and fully obtains the phases by the software using the number of pulses applied to the step motor.

The target movement and start and stop excitation phases of each line are stored in the ROM 101. In the case that the position detected by the position detector 104 corresponds to the target movement amount, the central processing unit 107 prevents more pulses being generated from the phase signal generator 106. Afterwards, the central processing unit 107 receives the excitation state of the present position from the phase signal data inputted by the phase detector 105 and compares it with the required stop phase stored in the ROM 101.

When the detected excitation state is matched with the required stop phase stored in the ROM 101, the central processing unit 107 supplies a pulse control signal to the phase signal generator 106 corresponding to a signal of the excitation state of a step for a next line.

However, when the detected excitation state is not matched with the required stop phase stored in the ROM 101, the central processing unit 107 generates an excitation state after next by skipping over the next excitation state as the starting phase for the next line in the signal generator 106, thereby matching the excitation state when starting for the two consecutive lines. In other words, during exciting in the order of **(A+B), (-A+B), (-A-B),** (**A-B**),..., in the case that the excitation state stops in the state of **(-A+B)** which is different from the required stop phase stored in the ROM 101, the central processing unit 107 enables the phase signal generator 106 to generate the excitation state of **(A-B)** skipping over the next state in order **(-A-B),** thereby maintaining the starting phase properly.

Moreover, when the step motor stops from rotating clockwise, it is possible to control the starting phase as described. On the contrary, when the step motor stops from rotating anti-clockwise, it is possible to perform bi-directional printing operation by exciting the phase of **(-A+B)** which is the next order in the reverse direction.

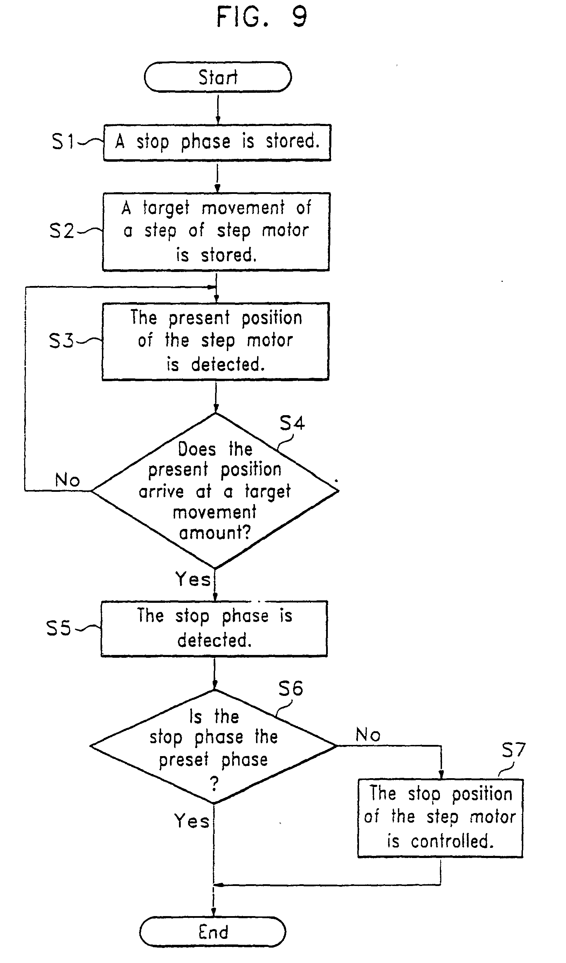

FIG. 9 is a flowchart illustrating the method of the present invention. Various data used in the program and for control are stored in the ROM 101. Especially, when the step motor decelerates and stops, the preferred excitation states of each phase are stored in the ROM 101 (step S1).

In addition, the target amount to be moved by the step motor is stored in the ROM 101 (step S2).

The present position of the step motor is detected by the position detector 104 (step S3), and is transmitted to the central processing unit 107. The central processing unit 107 judges whether the present position corresponds to the target value by comparing it with the target movement amount stored in the ROM 101 (step S4). When it is judged that the step motor arrives at the target movement amount, the central processing unit 107 detects the phase from the phase detector 105 (step S5) and then compares it with the stop phase stored in the ROM 101 (step S6). In the case that the detected phase does not match the required stop phase, the stop position of the step motor is controlled by increasing or decreasing the target amount of the step motor by one step (step S7). At this time, the step motor can increase or decrease according to the rotating direction of the step motor.

As described above, according to the method or system of the present invention, a step motor can be used in the printer which requires minute control, to actually decrease the error introduced by the manufacturing process of the motor. Especially, by causing the same torque per line in the acceleration and deceleration sections, the error of the step angle occurred in the manufacturing process can be minimised.

**Claims**

**1.** A system for controlling a step motor (1) which obtains a driving torque by exciting a plurality of coils (17, 18) into a predetermined sequence of respective states comprising:

> a position detector (104) for detecting the position of said step motor;
> a phase detector (105) for detecting the excitation state of the coils of said step motor;
> a control unit (100) for controlling start and stop operations of said step motor, so as to be performed in selected phases based on the position of said step motor detected by said position detector and the excitation state detected by said phase detector; and
> a driving unit (108) for driving said step motor according to a driving signal from said control unit;
>
> **characterised in that** said system further comprises a phase signal generator for exciting said coils into a next state out of sequence with said predetermined sequence.

2. The system of Claim 1, wherein said control unit comprises:

a memory (101, 102) for storing a control program, said selected excitation states and a target movement step number of said step motor; a central processing unit (107) arranged to detect a stop position by comparing data from said position detector with the target movement step number stored in said memory; to then detect a phase of the stop position from said phase detector; and to then generate a control signal for controlling said target movement number if the excitation state of the stop position and the selected phase of the stop position as stored in said memory do not correspond; and wherein said

a phase signal generator (106) generates a driving pulse to said driving unit in response to a control signal of said central processing unit.

3. The system of Claim 1, wherein said step motor is a two phase step motor which is designed to have a phase difference of 90°, and has a large starting torque in a start time by setting selected excitation states of two phases to have a same.sign in a stop time and to have different signs in the start time.

4. The system of Claim 2, wherein said control signal causes said step motor to move step-by-step in the moving direction of said step motor.

5. The system of Claim 1, wherein said step motor control unit (100) comprises:

a memory (101, 102) for storing a control program, said selected excitation states and a target movement step number of said step motor; a central processing unit (107) arranged to detect a stop position by comparing data of said position detector with the target movement step number stored in said memory; to then detect a phase of the stop position from said phase detector, and then to generate a control signal for driving said driving unit to have an excitation state after next in the sequence of respective states, by skipping over the next excitation state as a starting phase, if the excitation state of the stop position and the phase of the stop position stored in said memory do not match each other; and wherein said

a phase signal generator (106) generates a driving pulse to said step motor driving unit according to a control signal of said central processing unit.

6. A method for controlling a step motor (1) containing a plurality of coils (17, 18) which are excited into a predetermined sequence of states, each comprising a plurality of phases, the method comprising the steps of:

storing a target movement step number of said step motor and preferred excitation states of each phase in start and stop times; detecting (104) the stop time of said step motor and comparing the excitation state at the stop time with the stored (101, 102) excitation states of each phase of the stop time; and controlling said target movement number of the step in the case that said excitation states do not match each other; **characterised by** selecting a next state into which said coils are excited, said next state being out of sequence with said predetermined sequence.

7. The method of Claim 6, wherein said step motor is a two phase step motor which is designed to have a phase difference of 90°, and has a large starting torque in a start time by setting the preferred excitation states of two phases to have a same sign in a stop time and to have different signs in the start time.

8. The method of Claim 6, wherein, at said step of controlling the target movement, the controlling operation is performed step-by-step in the moving direction of said step motor.

**Patentansprüche**

1. System zum Steuern eines Schrittschaltmotors (1), der ein Antriebsmoment durch Erregen einer Mehrzahl von Spulen (17, 18) in eine vorbestimmte Folge von jeweiligen Zuständen erzielt, wobei das System Folgendes umfasst:

einen Positionsdetektor (104) zum Erfassen der Position des genannten Schrittschaltmotors; einen Phasendetektor (105) zum Erfassen des Erregungszustands der Spulen des genannten Schrittschaltmotors; eine Steuereinheit (100) zum Steuern der Start- und Stoppvorgänge des genannten Schrittschaltmotors, so dass sie in ausgewählten Phasen auf der Basis der von dem genannten Positionsdetektor erfassten Position des genannten Schrittschaltmotors und des von dem genannten Phasendetektor erfassten Erregungszustands erfolgen; und eine Antriebseinheit (108) zum Antreiben des genannten Schrittschaltmotors gemäß einem Antriebssignal von der genannten Steuereinheit; **dadurch gekennzeichnet, dass** das genannte System ferner einen Phasensignalgenerator zum Erregen der genannten Spulen in einen nächsten Zustand außerhalb der genannten vorbestimmten Folge umfasst.

2. System nach Anspruch 1, bei dem die genannte Steuereinheit Folgendes umfasst:

einen Speicher (101, 102) zum Speichern eines Steuerprogramms, der genannten gewählten Erregungszustände und einer Zielbewegungsschrittnummer des genannten Schrittschaltmotors;
eine Zentraleinheit (107), um eine Stoppposition durch Vergleichen von Daten von dem genannten Positionsdetektor mit der in dem genannten Speicher gespeicherten Zielbewegungsschrittnummer zu erfassen; um dann eine Phase der Stoppposition von dem genannten Phasendetektor zu erfassen und um dann ein Steuersignal zum Steuern der genannten Zielbewegungsnummer zu erzeugen, wenn der Erregungszustand der Stoppposition und die gewählte Phase der Stoppposition wie in dem genannten Speicher gespeichert nicht übereinstimmen; und

wobei der genannte Phasensignalgenerator (106) als Reaktion auf ein Steuersignal der genannten Zentraleinheit einen Antriebsimpuls zu der genannten Antriebseinheit erzeugt.

3. System nach Anspruch 1, bei dem der genannte Schrittschaltmotor ein Zweiphasen-Schrittschaltmotor ist, der so ausgelegt ist, dass er eine Phasendifferenz von 90° hat, und der ein hohes Startmoment in einer Startzeit hat, indem gewählte Erregungszustände von zwei Phasen so eingestellt werden, dass sie dasselbe Vorzeichen in einer Stoppzeit und unterschiedliche Vorzeichen in der Startzeit haben.

4. System nach Anspruch 2, bei dem das genannte Steuersignal bewirkt, dass sich das genannte Steuersignal Schritt für Schritt in der Bewegungsrichtung des genannten Schrittschaltmotors bewegt.

5. System nach Anspruch 1, bei dem die genannte Schrittschaltmotor-Steuereinheit (100) Folgendes umfasst:

einen Speicher (101, 102) zum Speichern eines Steuerprogramms, der genannten gewählten Erregungszustände und einer Zielbewegungsschrittnummer des genannten Schrittschaltmotors;

eine Zentraleinheit (107), um eine Stoppposition durch Vergleichen von Daten von dem genannten Positionsdetektor mit der in dem genannten Speicher gespeicherten Zielbewegungsschrittnummer zu erfassen; um dann eine Phase der Stoppposition von dem genannten Phasendetektor zu erfassen und um dann ein Steuersignal zum Ansteuern der genannten Antriebseinheit zu erzeugen, so dass diese einen Erregungszustand nach dem Nächsten in der Folge jeweiliger Zustände hat, indem der nächste Erregungszustand als Startphase übersprungen wird, wenn der Erregungszustand der Stoppposition und die Phase der Stoppposition wie in dem genannten Speicher gespeichert nicht übereinstimmen; und
wobei der genannte Phasensignalgenerator (106) gemäß einem Steuersignal der genannten Zentraleinheit einen Antriebsimpuls zu der genannten Schrittschaltmotor-Antriebseinheit erzeugt.

6. Verfahren zum Steuern eines Schrittschaltmotors (1), der eine Mehrzahl von Spulen (17, 18) beinhaltet, die in einer vorbestimmten Folge von Zuständen erregt werden, die jeweils eine Mehrzahl von Phasen umfassen, wobei das Verfahren die folgenden Schritte umfasst:

Speichern einer Zielbewegungschrittnummer des genannten Schrittschaltmotors und bevorzugter Erregungszustände jeder Phase in Start- und Stoppzeiten;
Erfassen (104) der Stoppzeit des genannten Schrittschaltmotors und Vergleichen des Erregungszustands zur Stoppzeit mit den gespeicherten (101, 102) Erregungszuständen jeder Phase der Stoppzeit; und
Steuern der genannten Zielbewegungsnummer des Schrittes in dem Fall, in dem die genannten Erregungszustände nicht miteinander übereinstimmen;

**gekennzeichnet durch** Wählen eines nächsten Zustands, in den die genannten Spulen erregt werden, wobei der genannte nächste Zustand außerhalb der genannten vorbestimmten Folge ist.

7. Verfahren nach Anspruch 6, bei dem der genannte Schrittschaltmotor ein Zweiphasen-Schrittschaltmotor ist, der so ausgelegt ist, dass er eine Phasendifferenz von 90° hat, und der ein hohes Startmoment in einer Startzeit hat, indem die bevorzugten Erregungszustände von zwei Phasen so eingestellt werden, dass sie dasselbe Vorzeichen in einer Stoppzeit und unterschiedliche Vorzeichen in der Startzeit haben.

**8.** Verfahren nach Anspruch 6, bei dem an dem genannten Schritt des Steuerns der Zielbewegung der Steuervorgang Schritt für Schritt in der Bewegungsrichtung des genannten Schrittschaltmotors erfolgt.

**Revendications**

**1.** Système pour commander un moteur pas-à-pas (1) qui obtient un couple moteur en excitant une pluralité de bobines (17, 18) en une séquence prédéterminée d'états respectifs, comprenant :

un détecteur de position (104) pour détecter la position dudit moteur pas-à-pas ;
un détecteur de phase (105) pour détecter l'état d'excitation des bobines dudit moteur pas-à-pas ;
une unité de commande (100) pour commander les opérations de démarrage et d'arrêt dudit moteur pas-à-pas, de façon à ce qu'elles soient effectuées dans des phases sélectionnées basées sur la position dudit moteur pas-à-pas détectée par ledit détecteur de position et sur l'état d'excitation détecté par ledit détecteur de phase ; et
une unité d'excitation (108) pour exciter ledit moteur pas-à-pas suivant un signal d'attaque provenant de ladite unité de commande ; système **caractérisé en ce que** ledit système comprend également un générateur de signaux de phase pour exciter lesdites bobines dans un état suivant en ne respectant pas l'ordre de ladite séquence prédéterminée.

**2.** Le système de la revendication 1, dans lequel ladite unité de commande comprend :

une mémoire (101, 102) pour mémoriser un programme de commande, lesdits états d'excitation sélectionnés et un numéro de pas de mouvement visé dudit moteur pas-à-pas ;
une unité centrale de traitement (107) disposée de façon à détecter une position d'arrêt en comparant les données provenant dudit détecteur de position avec le numéro de pas de mouvement visé mémorisé dans ladite mémoire ; à détecter ensuite une phase de la position d'arrêt provenant dudit détecteur de phase ; puis à produire un signal de commande pour commander ledit numéro de mouvement visé si l'état d'excitation de la position d'arrêt et la phase sélectionnée de la position d'arrêt mémorisés dans ladite mémoire ne correspondent pas ; et système dans lequel
un générateur de signaux de phase (106) produit une impulsion d'attaque pour ladite unité d'excitation en réponse à un signal de commande de ladite unité centrale de traitement.

**3.** Le système de la revendication 1, dans lequel ledit moteur pas-à-pas est un moteur pas-à-pas à deux phases qui est conçu de façon à avoir une différence de phase de 90°, et a un grand couple de démarrage dans un temps de démarrage en réglant les états d'excitation sélectionnés de deux phases de façon à ce qu'ils aient un même signe dans un temps d'arrêt et des signes différents dans le temps de démarrage.

**4.** Le système de la revendication 2, dans lequel ledit signal de commande fait bouger pas à pas le moteur pas-à-pas dans le sens du mouvement dudit moteur pas-à-pas.

**5.** Le système de la revendication 1, dans lequel ladite unité de commande du moteur pas-à-pas (100) comprend :

une mémoire (101, 102) pour mémoriser un programme de commande, lesdits états d'excitation sélectionnés et un numéro de pas de mouvement visé dudit moteur pas-à-pas ;
une unité centrale de traitement (107) disposée de façon à détecter une position d'arrêt en comparant les données dudit détecteur de position avec le numéro de pas de mouvement visé mémorisé dans ladite mémoire ; puis pour détecter une phase de la position d'arrêt à partir dudit détecteur de phase, et ensuite pour produire un signal de commande pour exciter ladite unité d'excitation de façon à avoir un état d'excitation après le suivant dans la séquence des états respectifs, en sautant l'état d'excitation suivant comme une phase de démarrage, si l'état d'excitation de la position d'arrêt et la phase de la position d'arrêt mémorisés dans ladite mémoire ne correspondent pas l'un avec l'autre ; et système dans lequel
un générateur de signaux de phase (106) produit une impulsion d'attaque pour ladite unité d'excitation du moteur pas-à-pas suivant un signal de commande de ladite unité centrale de traitement.

**6.** Méthode pour commander un moteur pas-à-pas (1) contenant une pluralité de bobines (17, 18) qui sont excitées en une séquence prédéterminée d'états, comprenant chacun une pluralité de phases, cette méthode comprenant les étapes suivantes :

la mémorisation d'un numéro de pas de mouvement visé dudit moteur pas-à-pas et des états d'excitation préférés de chaque phase dans les temps de démarrage et d'arrêt ;
la détection (104) du temps d'arrêt dudit moteur pas-à-pas et la comparaison de l'état d'excitation au temps d'arrêt avec les états d'excitation mémorisés (101, 102) de chaque phase du temps d'arrêt ; et

la commande dudit numéro de mouvement visé du pas au cas où lesdits états d'excitation ne correspondraient pas les uns aux autres ; **caractérisée en** sélectionnant un état suivant dans lequel lesdites bobines sont excitées, ledit état suivant ne respectant pas l'ordre de ladite séquence prédéterminée.

7. La méthode de la revendication 6, dans laquelle ledit moteur pas-à-pas est un moteur pas-à-pas à deux phases qui est conçu de façon à avoir une différence de phase de 90°, et a un grand couple de démarrage dans un temps de démarrage en réglant les états d'excitation préférés de deux phases de façon à ce qu'ils aient un même signe dans un temps d'arrêt et des signes différents dans le temps de démarrage.

8. La méthode de la revendication 6, dans laquelle, lors de ladite opération de commande du mouvement visé, l'opération de commande est effectuée pas à pas dans le sens du mouvement dudit moteur pas-à-pas.

FIG. 1

FIG. 2

# FIG. 3

# FIG. 4

| Step | Excitation state of phase A | Excitation state of phase B | Combined torque |
|------|------|------|------|
| 0 | + | + | A+B |
| 1 | + | − | A−B |
| 2 | − | − | −(A+B) |
| 3 | − | + | −(A−B) |
| 4 | + | + | A+B |

FIG. 5

FIG. 6

FIG. 7A

Acceleration section | Normal speed section | Deceleration section

| +A | −A | −A | +A | +A | −A | −A | +A | +A | −A | −A |
| +A | +B | −B | −B | +B | +B | −B | −B | +B | +B | −B |

0 1 2 3 4 5 6 7 8 9 10

FIG. 7B

| +A | −A | −A | +A | +A | −A | −A | +A | +A | −A | −A |
| +A | +B | −B | −B | +B | +B | −B | −B | +B | +B | −B |

0 1 2 3 4 5 6 7 8 9 10

$\Delta L$   $\Delta L$   $\Delta L$

FIG. 7C

| +A | +A | −A | −A | +A | +A | −A | −A | +A | +A | −A |
| −B | +B | +B | −B | −B | +B | +B | −B | −B | +B | +B |

0 1 2 3 4 5 6 7 8 9 10

EP 0 919 895 B1

FIG. 8

# FIG. 9

```
                    ┌──────────────┐
                    │    Start     │
                    └──────┬───────┘
                           │
        ┌──────────────────▼──────────────────┐
S1 ─────┤     A stop phase is stored.          │
        └──────────────────┬──────────────────┘
                           │
        ┌──────────────────▼──────────────────┐
        │        A target movement of         │
S2 ─────┤       a step of step motor          │
        │             is stored.              │
        └──────────────────┬──────────────────┘
                           │
        ┌──────────────────▼──────────────────┐
        │        The present position         │
S3 ─────┤         of the step motor           │
        │            is detected.             │
        └──────────────────┬──────────────────┘
                           │
                          ╱╲  S4
                        ╱    ╲
                      ╱ Does the ╲
                    ╱  present position ╲
   No ◄────────────╲  arrive at a target ╱
                    ╲   movement        ╱
                      ╲  amount?       ╱
                        ╲            ╱
                          ╲        ╱
                            Yes│
        ┌──────────────────▼──────────────────┐
S5 ─────┤        The stop phase is            │
        │            detected.                │
        └──────────────────┬──────────────────┘
                           │
                          ╱╲  S6
                        ╱    ╲
                      ╱  Is the ╲
                    ╱ stop phase the ╲     No          S7
                    ╲  preset phase   ╱──────────►┌──────────────┐
                      ╲     ?       ╱             │ The stop position │
                        ╲        ╱                │ of the step motor │
                          ╲    ╱                  │  is controlled.   │
                            Yes                   └────────┬─────────┘
                           │                               │
                           ◄───────────────────────────────┘
                    ┌──────▼───────┐
                    │     End      │
                    └──────────────┘
```